# DEMANDE DE BREVET EUROPEEN

(11) **EP 3 217 658 A1**
(43) Date de publication de la demande: **13.09.2017**
(21) Numéro de dépôt: 17152189.1
(22) Date de dépôt: 19.01.2017
(51) Int. Cl.: H04N 7/18, H04N 21/4223, H04N 21/422, H04N 21/854, H04N 21/2187, H04N 21/236, A63H 27/00, A63H 30/04, H04N 19/46

(54) **PROCÉDÉ D'ENCODAGE ET DE DÉCODAGE D'UNE VIDÉO D'UN DRONE, ET DISPOSITIFS ASSOCIÉS**

(30) Priorité: 09.03.2016 FR 1651965
(71) Demandeur: Parrot Drones, 75010 Paris (FR)
(72) Inventeur: BARRE, Aurélien, 75015 Paris (FR); BOUVARD, Jérôme, Berkeley, CA 94702 (US); SEYDOUX, Henri, 75017 Paris (FR)
(74) Mandataire: Dupuis-Latour, Dominique

(57) **Abrégé**

L'invention concerne un procédé d'encodage dynamique de données de vol dans une video, mis en oeuvre dans un drone, le drone comprenant un capteur video et des capteurs d'attitude et/ou des capteurs d'altitude. Ce procédé comprend, pour des images successives capturées, une étape de capture de données de vol (E22) du drone à partir des capteurs d'attitude et/ou des capteurs d'altitude et une étape d'encodage de l'image capturée (E23). Il comprend en outre une étape de stockage (E24), dans un conteneur de données, de l'image encodée, une étape d'adjonction (E25) à l'image encodée, dans le conteneur de données, de tout ou partie des données de vol capturées, et une étape de stockage (E26) du conteneur de données dans une mémoire du drone (10), et/ou de transmission (E27), par le drone (10), du conteneur de données vers un dispositif distant (16). L'encodage des images video comprend un encodage MPEG-4 (ISO/IEC 14496), et le conteneur de données est une piste selon MPEG-4 Partie 12, multiplexant selon une horloge commune ladite image encodée et lesdites données de vol associées.

## Description

L'invention concerne un procédé d'encodage dynamique de données de vol dans une video mis en oeuvre dans un drone et un drone embarquant une caméra et d'autres capteurs comprenant un tel procédé d'encodage. L'invention concerne aussi un procédé de décodage d'une video et un dispositif de visualisation comprenant un tel procédé de décodage.

Le *Bebop Drone* et le *Disco* de Parrot ou l'*eBee* de SenseFly, sont des exemples typiques de drones. Ils sont équipés d'une série de capteurs (accéléromètres, gyromètres 3 axes, altimètre) et d'au moins une caméra. Cette caméra est par exemple une caméra de visée verticale captant une image du terrain survolé ou une caméra de visée frontale captant une image de la scène vers laquelle se dirige le drone. Ces drones sont pourvus d'un moteur ou de plusieurs rotors entrainés par des moteurs respectifs aptes à être commandés de manière différenciée afin de piloter le drone en attitude et en vitesse.

D'autres exemples de drones sont les drones roulants tels que le *MiniDrone Jumping Sumo* de Parrot et les drones flottants tels que le drone *Hydrofoil* de Parrot.

La caméra video frontale est utilisable pour un pilotage "en mode immersif" du drone, c'est-à-dire où l'opérateur se sert de l'image de la caméra de la même façon que s'il se trouvait lui-même à bord du drone. Elle peut également servir à capter des séquences d'images d'une scène vers laquelle se dirige le drone, l'opérateur se servant du drone de la même façon que d'une caméra qui, au lieu d'être tenue à la main, serait portée par le drone. Les images recueillies peuvent être enregistrées, mises en ligne sur des sites web, envoyées à d'autres internautes, partagées sur des réseaux sociaux, etc.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Dans la suite de la description, on utilisera de façon générale le terme de "dispositif de pilotage" pour désigner cet appareil, mais ce terme ne doit pas être entendu dans son acception étroite ; bien au contraire, il englobe également les dispositifs fonctionnellement équivalents, notamment tous les dispositifs portables munis au moins d'un écran de visualisation et de moyens d'échange de données sans fil, tels que *smartphone,* etc.

Le dispositif de pilotage incorpore les divers organes de contrôle nécessaires à la détection des commandes de pilotage et à l'échange bidirectionnel de données via une liaison radio de type réseau local sans fil Wi-Fi (IEEE 802.11) ou Bluetooth directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

La liaison radio sans fil bidirectionnelle comprend une liaison montante (du dispositif de pilotage vers le drone) et une liaison descendante (du drone vers la tablette) pour transmettre des trames de données contenant :
- (du dispositif de pilotage vers le drone) les commandes de pilotage, ci-après simplement désignées "commandes", envoyées à intervalles réguliers et de façon systématique ;
- (du drone vers le dispositif de pilotage) le flux video issu de la caméra ; et
- (du drone vers le dispositif de pilotage) en tant que de besoin, des données de vol établies par le drone ou des indicateurs d'état tels que : niveau des batteries, phase de vol (décollage, stabilisation automatique, posé au sol, etc.), altitude, défaut détecté, etc.

Pour permettre une telle communication, le drone comprend un moyen de communication relié à une antenne de sorte à permettre une communication avec le dispositif de pilotage. L'antenne est par exemple une antenne Wi-Fi.

L'invention concerne plus précisément un procédé d'encodage dynamique d'images d'une séquence d'images capturées par la caméra embarquée dans un drone avec le contexte de capture de l'image, en vue de leur mémorisation, pour, par exemple, reconstruire *a posteriori* la video de la scène visualisée par la caméra frontale ou être envoyées pour être visualisées par l'opérateur sur le dispositif de pilotage "en mode immersif" du drone.

Des procédés de mémorisation d'images video dans un drone pour une analyse *a posteriori* sont connus. De même, il est connu de mémoriser les informations de contexte du vol du drone.

Toutefois, ces solutions présentent l'inconvénient que la reconstruction de la video du vol en intégrant les informations relatives au vol est malaisée et donc le résultat peut être de faible qualité. Cette reconstruction est d'autant plus difficile qu'il est nécessaire de reconstruire la video à partir d'une séquence d'images mémorisées et d'informations de contexte de vol sans lien avec la séquence d'images.

Le GB 2 519 645 A décrit un drone utilisé pour la surveillance des feux de forêt. Ce drone envoie séparément le flux video et des données GPS à une station au sol, qui combine ensuite ces informations dans des paquets successifs, pour permettre la transmission à un centre de télésurveillance via un réseau à commutation de paquets. De fait, l'adjonction des données de vol (les données GPS) aux images encodées est opérée en aval par la station distante, après transmission par le drone.

Le but de la présente invention est de remédier aux inconvénients des solutions existantes, en proposant une technique permettant notamment l'encodage des images capturées et d'informations associées afin par exemple de créer *a posteriori* une video contextualisée avec les informations de vol du drone.

A cet effet, l'invention propose un procédé, mis en oeuvre dans un drone, d'encodage dynamique de données de vol dans une video, le drone comprenant un capteur video et des capteurs d'attitude et/ou des capteurs d'altitude. Comme cela est divulgué par le GB 2 519 645 A précité, le procédé comprend, pour des images successives capturées, une étape de capture de données de vol du drone à partir des capteurs d'attitude et/ou des capteurs d'altitude ; et une étape d'encodage de l'image capturée. De façon caractéristique, le procédé d'encodage comprend en outre : une étape de stockage, dans un conteneur de données, de l'image encodée ; une étape d'adjonction à l'image encodée, dans ledit conteneur de données, de tout ou partie des données de vol capturées ; et une étape de stockage dudit conteneur de données dans une mémoire du drone, et/ou de transmission, par le drone, dudit conteneur de données vers un dispositif distant.

Très avantageusement l'étape d'encodage desdites images video comprend un encodage MPEG-4 (ISO/IEC 14496), et le conteneur de données est une piste selon MPEG-4 Partie 12, multiplexant selon une horloge commune ladite image encodée et lesdites données de vol associées.

Les données de vol capturées peuvent notamment comprendre des données du groupe formé par : des données d'attitude du drone, des données d'altitude du drone, des données de géolocalisation du drone, une information relative à la phase de vol, la vitesse de vol et/ou la position de la fenêtre de visualisation du capteur video.

L'invention propose également un procédé, mis en oeuvre dans un dispositif de décodage ou de visualisation d'une video d'un drone, de décodage d'une video, la video comprenant une pluralité d'images successives encodées et des données de vol, stockées ensemble dans un conteneur de données.

De façon caractéristique, ce procédé comprend, pour des images encodées : une étape d'extraction, dudit conteneur, d'une image encodée ; une étape de décodage de l'image extraite ; et une étape d'extraction des données de vol associées à l'image.

L'invention propose également un drone comprenant un capteur video et des capteurs d'attitude et/ou des capteurs d'altitude, apte à mettre en oeuvre le procédé d'encodage conformément à l'invention décrite. L'invention propose également un dispositif de pilotage d'un drone comprenant des moyens de pilotage d'un drone et des moyens de communication avec ledit drone apte à envoyer des commandes de vol et à recevoir des données dudit drone.

Le dispositif de pilotage comprend des moyens pour recevoir dudit drone une video comprenant une pluralité d'images encodées et des données de vol, stockées ensemble dans un conteneur de données, et des moyens pour mettre en oeuvre le procédé de décodage conformément à l'invention décrite.

L'invention propose également un dispositif de décodage d'une video d'un drone, la video comprenant une pluralité d'images encodées et des données de vol, stockées ensemble dans un conteneur de données, le dispositif comprenant des moyens aptes à mettre en oeuvre le procédé de décodage conformément à l'invention décrite.

On va maintenant décrire un exemple de mise en oeuvre de la présente invention, en référence aux dessins annexés.
La Figure 1 est une vue d'ensemble montrant le drone et le dispositif de pilotage associé permettant son pilotage.
La Figure 2 illustre un procédé d'encodage dynamique de données de vol dans une video conformément à l'invention.
La Figure 3 illustre un procédé de décodage d'une video conformément à l'invention.

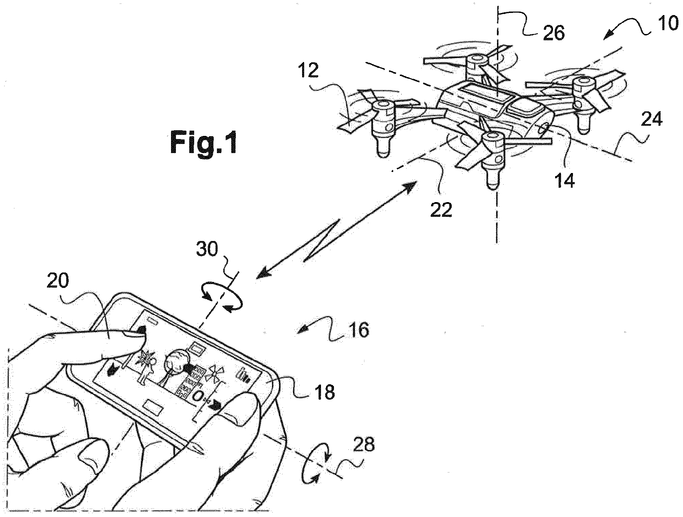

Il va maintenant être décrit un exemple de mise en oeuvre de l'invention. Sur la Figure 1, la référence 10 désigne de façon générale un drone, qui est par exemple un quadricoptère tel que le modèle *Bebop Drone* de Parrot. Ce drone comporte quatre rotors coplanaires 12 dont les moteurs sont pilotés indépendamment par un système intégré de navigation et de contrôle d'attitude.

L'invention s'applique également à un drone de type aile volante tel que le *Disco* de Parrot, l'*eBee* de SenseFly, ou de type drone roulant tel que le *MiniDrone Jumping Sumo* de Parrot ou de type flottant tel que le drone *Hydrofoil* de Parrot.

Le drone est pourvu d'un capteur video 14 à visée frontale permettant d'obtenir une image de la scène vers laquelle est orienté le drone. Le drone comporte également un capteur video à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage *ϕ*, roulis *θ* et lacet *ψ*) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone peut également comprendre un module de géolocalisation afin d'être apte à chaque instant de déterminer la position du drone. Cette position est exprimée dans un format donnant la latitude, la longitude et l'altitude. En cours de vol, le drone est donc apte à déterminer sa position à chaque instant.

Le drone peut également comprendre une boussole.

Le drone 10 est piloté par un dispositif de pilotage qui est un appareil de télécommande distant 16 pourvu d'un écran tactile 18 affichant l'image embarquée par le capteur video frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16 et de l'appareil 16 vers le drone 10 pour l'envoi de commandes de pilotage.

Conformément à l'invention, cet échange comprend notamment la transmission du drone 10 vers l'appareil 16 de l'image captée par le capteur video 14 et des données de vol tel que l'altitude, la géolocalisation du drone, etc. reflétant l'état du drone lors de la capture de l'image.

Le pilotage du drone consiste à faire évoluer celui-ci par :
a) rotation autour d'un axe de tangage 22, pour le faire avancer ou reculer ;
b) rotation autour d'un axe de roulis 24, pour le décaler vers la droite ou vers la gauche ;
c) rotation autour d'un axe de lacet 26, pour faire pivoter vers la droite ou vers la gauche l'axe principal du drone ; et
d) translation vers le bas ou vers le haut par changement du régime des gaz, de manière à respectivement réduire ou augmenter l'altitude du drone.

Conformément à l'invention, l'affichage du flux video et des données de vol capturées par le drone est réalisé sur le dispositif de pilotage à partir de données reçues en continu (en *streaming*) du drone.

En vue d'optimiser la bande passante du réseau de communication et d'améliorer la qualité des images de la video, il est prévu de définir un format simple et ouvert d'encodage des images capturées et des données de vol du drone permettant lors du traitement de ces informations de reconstituer une video contextualisée avec les données de vol du drone. En d'autres termes, les images vont être encodées et des données de vol du drone vont être associées à des images de la séquence d'images formant la video.

De la sorte, des images de la séquence video vont être mémorisées avec des données de vol reflétant l'état du drone lors de la capture de l'image. Selon un mode de réalisation particulier, les données de vol sont multi-plexées avec les images de la séquence video.

Ces données (images et données de vol) peuvent être mémorisées dans un espace mémoire installé dans le drone en vue d'un traitement *a poste-riori* ou être envoyées notamment en continu (en *streaming*) du drone vers le dispositif de pilotage.

Selon un mode de réalisation particulier, l'encodage des images capturées est réalisé conformément à la norme MPEG-4.

Les données de vol peuvent contenir par exemple tout ou partie des données suivantes : l'état du drone (en vol, au sol, en phase de décollage, en phase d'atterrissage, etc.), le mode de pilotage utilisé par l'opérateur pour le pilotage du drone (mode manuel, en mode retour automatique au point de décollage, en mode programmé de vol, en mode "suis-moi" ("*follow-me*")*,* etc.), la date et heure, les données d'attitude (tangage *ϕ*, roulis *θ* et lacet *ψ*), les données de position du capteur video (l'inclinaison du capteur video, orientation de l'axe de visée du capteur video, la position de la fenêtre de visualisation du capteur video), le temps d'exposition lors de la capture d'image, la sensibilité ISO, le niveau de réception du signal WiFi, le pourcentage de charge de la batterie du drone, des données d'altitude, les données de géolocalisation du drone (latitude, longitude et altitude), une donnée d'altitude relative par rapport au point de décollage, la distance par rapport au point de décollage et la vitesse de vol.

Pour cela, conformément à l'invention, un procédé d'encodage dynamique est mis en oeuvre dans le drone, de sorte à encoder les images capturées et d'associer à des images encodées, des données de vol du drone reflétant l'état du drone lors de la capture de ces images.

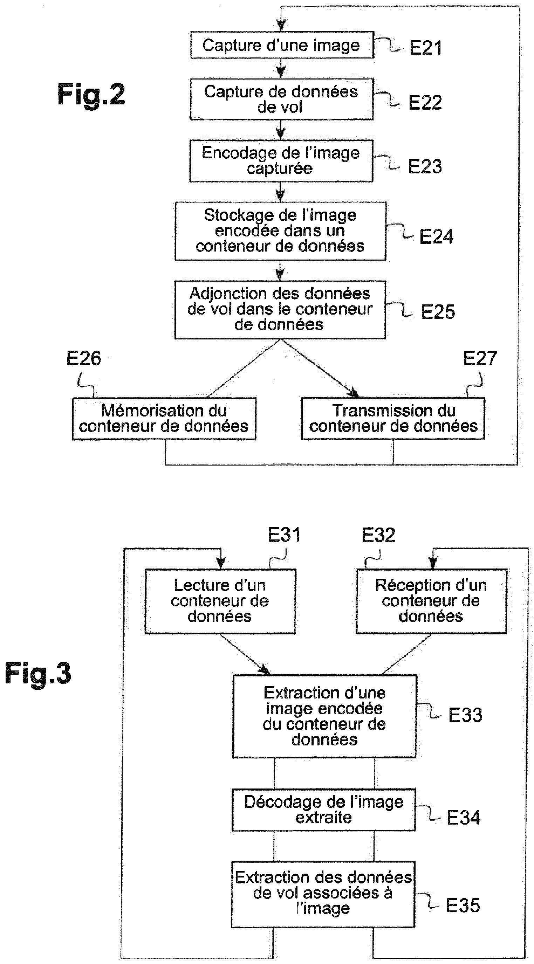

Un diagramme illustrant ce procédé d'encodage est montré en Figure 2. Le procédé d'encodage dynamique, c'est-à-dire en continu, comprend une première étape E21 de capture d'une image à partir du capteur video. L'étape E21 est suivie d'une étape E22 de capture des données de vol du drone à partir de capteurs du drone, par exemple des capteurs d'attitude et/ou des capteurs d'altitude. Les capteurs d'altitude sont par exemple un capteur de géolocalisation, un télémètre à ultrasons, ou tout autre dispositif apte à déterminer l'altitude dudit drone. Les données de vol comprennent une ou plusieurs données précédemment définies.

L'étape E22 est suivie de l'étape E23 d'encodage de l'image capturée. Selon un mode de réalisation de l'invention, l'image est encodée selon la norme MPEG-4. Cette norme est également appelée ISO/CEI 14496. Il s'agit d'une norme d'encodage d'objets audiovisuels.

L'étape E23 est suivie d'une étape E24 consistant à stocker l'image encodée dans un conteneur de données.

Selon un mode de réalisation, le conteneur de données est une piste au sens de la norme MPEG-4. Concernant le format du conteneur de données utilisé dans la norme MPEG-4, celui-ci est décrit dans la norme MPEG-4 Partie 12 (ISO/IEC 14496-12).

Le conteneur de données permet de multiplexer plusieurs média selon une horloge commune, par exemple une ou plusieurs pistes video avec une ou plusieurs pistes audio. Dans le contexte de l'invention et selon un exemple de mise en oeuvre de l'invention, une piste video est multiplexée avec une piste de métadonnées datées.

L'étape E24 est suivie de l'étape E25 d'adjonction de données de vol capturées à l'étape E22 à l'image encodée dans le conteneur de données.

Selon un mode particulier de réalisation, l'image encodée et les données de vol associées sont mémorisées dans un conteneur video à l'étape E26, le conteneur video étant mémorisé dans un espace mémoire contenu dans le drone.

Dans le mode de réalisation dans lequel l'encodage est réalisé selon la norme MPEG-4, cette norme d'encodage est basée sur un conteneur video. Le conteneur video permet de rassembler en un seul fichier un flux video et d'autres informations notamment les données de vol associées aux images.

Selon un mode particulier de réalisation, les données de vol sont mémorisées dans des conteneurs de métadonnées dont la méthode d'inclusion dans le conteneur de données est définie dans la norme MPEG-4.

Selon un mode de réalisation particulier dans lequel le drone est piloté avec visualisation de la video sur le dispositif de pilotage, le procédé comprend une étape complémentaire E27 de transmission du conteneur de données comprenant l'image encodée et des données de vol reflétant l'état du drone lors de la capture de ladite image.

Les étapes E26 et E27 précédemment décrites sont suivies de l'étape E21 en vue de l'encodage d'autres images capturées.

Il est à noter que les étapes E21 à E23 peuvent être exécutées selon un ordre différent, voire en parallèle.

Selon un autre mode de réalisation, l'étape E23 consiste à réaliser l'encodage de l'image capturée selon deux formats d'encodage différents. En particulier, l'image est encodée selon un premier format d'encodage permettant le maintien d'une haute qualité visuelle de l'image notamment en vue de mémoriser cette image encodée dans un conteneur video et l'image est encodée selon un second format d'encodage dégradant la qualité visuelle de l'image afin de transmettre via la liaison radio cette image encodée par le drone au dispositif de pilotage pour une visualisation sur le dispositif de pilotage. Ce second format permet de réduire la taille de l'image encodée qui va être transmise via la liaison radio entre le drone et le dispositif distant par exemple le dispositif de pilotage.

Selon un exemple de réalisation, le premier format est un format 1080p correspondant à une définition d'image de 1920 x 1080 c'est-à-dire de 1080 lignes de 1920 points chacune. Le second format est un format 360p correspondant à une définition d'image de 640 x 360 c'est-à-dire de 360 lignes de 640 points chacune.

Ainsi, lors de l'étape E23, l'encodage de l'image capturée peut être réalisé selon l'un des deux formats décrits ou selon les deux formats décrits de sorte à permettre une mémorisation de l'image encodée selon une bonne qualité visuelle et/ou une transmission de l'image encodée selon une qualité moindre.

L'étape E27 de transmission du conteneur contenant de données relatives à l'image encodée et des données de vol capturées va maintenant être décrite plus en détail.

La transmission des images encodées avec les données de vol associées consiste à émettre en flux continu (en *streaming*) les conteneurs de données créés lors des étapes E21 à E25 précédemment décrites, du drone à un dispositif distant, notamment au dispositif de pilotage du drone. Une telle transmission permet au dispositif de pilotage du drone de visualiser les images capturées par le drone en temps réel et donc permet le mode de pilotage avec visualisation de la video sur le dispositif de pilotage.

La transmission de tels conteneurs de données va également permettre au dispositif de pilotage, l'affichage des images capturées ainsi que les données de vol reflétant l'état du drone.

Ainsi, via ces conteneurs de données, les données de vol affichées sur le dispositif de pilotage sont synchrones avec les images visualisées.

Pour réaliser la transmission des conteneurs de données, le protocole de communication informatique RTP (*Real-Time Transport Protocol*) peut être utilisé. Ce protocole de communication permet le transport de données soumises à des contraintes de temps réel, telles que des flux video. En particulier pour la transmission de ces conteneurs de données, et selon un mode de réalisation particulier, il va être utilisé un ou plusieurs entêtes RTP par conteneur à transmettre et une extension d'entête par conteneur de données comportant les données de vol. Ce mode de réalisation particulier permet d'éviter un encombrement du réseau.

Afin d'optimiser la bande passante du réseau, les données relatives au vol du drone peuvent être non pas toutes transmises du drone au dispositif de pilotage, mais uniquement une sélection de ces données relatives au vol peut être transmise. Par exemple, les données de géolocalisation et la vitesse de vol du drone peuvent être transmises non pas avec chaque image mais par exemple toutes les six images.

Selon un exemple particulier de réalisation, des données de vol parmi la liste de données suivante peuvent être transmises pour chaque image via le conteneur de données : l'attitude du drone, les données de position du capteur video (l'inclinaison du capteur caméra, orientation de l'axe de visée du capteur video, la position de la fenêtre de visualisation du capteur video), le temps d'exposition lors de la capture d'image et la sensibilité ISO.

Les autres données de vol peuvent être envoyées via le conteneur de données par exemple toutes les six images. Il s'agit notamment du niveau de réception du signal WiFi et/ou le pourcentage de charge de la batterie, les données de géolocalisation, l'altitude du drone par rapport à son point de décollage, la distance par rapport à son point de décollage, la vitesse de vol, l'état de vol du drone et/ou le mode de pilotage du drone.

La Figure 3 illustre le procédé de décodage d'une video mis en oeuvre dans un dispositif de visualisation d'une video d'un drone, soit à partir du conteneur video contenant l'ensemble des images encodées selon le procédé décrit en Figure 2 soit à partir de conteneurs de données reçus en continu du drone.

Ainsi, selon un premier mode de mise en oeuvre du procédé de décodage d'une video, celui-ci est mis en oeuvre dans un dispositif de visualisation d'une video ou un dispositif de traitement d'une video à partir du conteneur video contenant l'ensemble des conteneurs de données dans lesquels sont stockées respectivement l'image encodée et les données de vol du drone reflétant l'état du drone au moment de la capture de l'image. Ainsi, le procédé de décodage peut comprendre une première étape E31 de lecture d'un conteneur de données à décoder.

Selon un second mode de mise en oeuvre du procédé de décodage d'une video, celui-ci est mis en oeuvre dans un dispositif de visualisation d'une video, et notamment dans un dispositif de pilotage du drone lors de la réception en flux de conteneurs de données dans lesquels sont stockées respectivement l'image encodée et les données de vol du drone au moment de la capture de l'image. Ainsi, le procédé de décodage peut comprendre une première étape E32 de réception d'un conteneur de données à décoder transmis par le drone.

Les étapes E31 et E32 sont suivies d'une étape E33 d'extraction de l'image encodée du conteneur de données.

L'étape E34 suit l'étape E33. A l'étape E34, le procédé réalise un décodage de l'image encodée extraite.

Cette étape est suivie d'une étape E35 d'extraction des données de vol associées à l'image. Selon un mode de réalisation, les données de vol associées à l'image sont stockées dans un conteneur de métadonnées du conteneur de données.

L'étape E35 est ensuite suivie de l'étape E31 ou E32 en fonction du mode de réalisation mis en oeuvre.

Conformément à l'invention, et selon un mode de réalisation, le drone mémorise un conteneur video contenant d'une part l'ensemble des images capturées encodées et d'autre part l'ensemble des données de vol du drone lors de la capture respective de chacune des images. Ces données de vol sont par exemple mémorisées dans un conteneur de métadonnées.

Lors du traitement de la video, notamment lors de la construction d'un film video à partir du conteneur video, il est possible d'enrichir le film video d'informations intégrant les données de vol du drone. L'invention permet une bonne synchronisation de l'affichage des données de vol du drone avec les images du drone.

Étant donné que les données de vol sont mémorisées dans un sous-conteneur spécifique, notamment un conteneur de métadonnées, il est aussi possible d'extraire du conteneur video les données de vol et de créer un fichier de données de vol du drone reprenant l'ensemble des données de vol mémorisées dans le conteneur video.

## Revendications

1. Procédé, mis en oeuvre dans un drone, d'encodage dynamique de données de vol dans une video, ledit drone comprenant un capteur video et des capteurs d'attitude et/ou des capteurs d'altitude,
ce procédé comprenant, pour des images successives capturées :
- une étape de capture de données de vol (E22) dudit drone à partir des capteurs d'attitude et/ou des capteurs d'altitude ; et
- une étape d'encodage de l'image capturée (E23),
**caractérisé en ce qu'**il comprend en outre :
- une étape de stockage (E24), dans un conteneur de données, de l'image encodée ;
- une étape d'adjonction (E25) à l'image encodée, dans ledit conteneur de données, de tout ou partie des données de vol capturées ; et
- une étape de stockage (E26) dudit conteneur de données dans une mémoire du drone (10), et/ou de transmission (E27), par le drone (10), dudit conteneur de données vers un dispositif distant (16).

2. Procédé d'encodage selon la revendication 1, dans lequel :
- l'étape d'encodage desdites images video comprend un encodage MPEG-4 (ISO/IEC 14496), et
- le conteneur de données est une piste selon MPEG-4 Partie 12, multiplexant selon une horloge commune ladite image encodée et lesdites données de vol associées.

3. Procédé d'encodage selon la revendication 1, **caractérisé en ce que** les données de vol capturées comprennent des données du groupe formé par : des données d'attitude du drone, des données d'altitude du drone, des données de géolocalisation du drone, une information relative à la phase de vol, la vitesse de vol et/ou la position de la fenêtre de visualisation du capteur video.

4. Procédé, mis en oeuvre dans un dispositif de décodage ou de visualisation d'une video d'un drone, de décodage d'une video,
la video comprenant une pluralité d'images successives encodées et des données de vol, stockées ensemble dans un conteneur de données, **caractérisé en ce que** le procédé comprend, pour des images encodées :
- une étape d'extraction (E33), dudit conteneur, d'une image encodée ;
- une étape de décodage (E34) de l'image extraite ; et
- une étape d'extraction (E35) des données de vol associées à l'image.

5. Drone comprenant un capteur video et des capteurs d'attitude et/ou des capteurs d'altitude, **caractérisé en ce qu'**il comprend des moyens de mise en oeuvre du procédé d'encodage selon l'une des revendications 1 à 3.

6. Dispositif de pilotage d'un drone, comprenant :
- des moyens de pilotage d'un drone ; et
- des moyens de communication avec ledit drone aptes à envoyer des commandes de vol et à recevoir des données dudit drone,
**caractérisé en ce que** le dispositif de pilotage comprend :
- des moyens pour recevoir dudit drone une video comprenant une pluralité d'images encodées et des données de vol, stockées ensemble dans un conteneur de données ; et
- des moyens pour décoder ladite video conformément au procédé de décodage de la revendication 4.

7. Dispositif de décodage d'une video d'un drone, la video comprenant une pluralité d'images encodées et des données de vol, stockées ensemble dans un conteneur de données,
**caractérisé en ce que** et **en ce que** le dispositif comprend des moyens pour décoder ladite video conformément au procédé de décodage de la revendication 4.
